# FASCICULE DE BREVET EUROPEEN

(11) **EP 0 736 963 B1**
(45) Date de publication et mention de la délivrance du brevet: **12.12.2001**
(21) Numéro de dépôt: 96400748.8
(22) Date de dépôt: 05.04.1996
(51) Int. Cl.: H02P 8/34

(54) **Procédé et dispositif de commande d'un moteur pas à pas**
Verfahren und Vorrichtung zur Regelung eines Schrittmotors
Process and apparatus for controlling a stepping motor

(30) Priorité: 07.04.1995 FR 9504165
(43) Date de publication de la demande: 09.10.1996
(73) Titulaire: MAGNETI MARELLI FRANCE, 92000 Nanterre (FR)
(72) Inventeur: Marteau, Bernard, 91430 Igny (FR); Eisenberger, Benjamin, 78600 Maisons Lafitte (FR)
(74) Mandataire: Texier, Christian

(56) Documents cités:
- EP-A- 0 046 722
- EP-A- 0 382 887
- EP-A- 0 403 691
- EP-A- 0 551 562
- FR-A- 2 576 469
- US-A- 4 282 471

## Description

La présente invention concerne le domaine des dispositifs de commande et de contrôle des moteurs pas à pas.

Le but général de la présente invention est de proposer des moyens permettant de connaitre avec précision la position angulaire du rotor d'un moteur pas à pas.

Les moteurs pas à pas comprennent généralement un stator comprenant un circuit magnétique et plusieurs enroulements (typiquement deux) définissant N paires de pôles lesquels sont alternativement nord et sud, et un rotor coaxial au stator, qui possède X paires de pôles. L'alimentation des enroulements à l'aide d'une tension électrique contrôlée, par exemple des signaux proportionnels au sinus et cosinus de l'angle recherché, génère un champ magnétique rotatif suivi par le rotor.

Les moteurs pas à pas présentent des caractéristiques, notamment de couple moteur, vitesse et accélération, qui en font des outils séduisants dans de nombreux domaines d'applications.

Dans le domaine automobile par exemple, il a été envisagé déjà depuis de nombreuses années d'utiliser des moteurs pas à pas pour piloter les indicateurs à aiguille intégrés dans les tableaux de bord ou encore pour piloter différents organes mécaniques, tels que papillon de contrôle moteur.

Cependant les moteurs pas à pas n'ont pas connus jusqu'ici, dans de nombreux domaines, le développement escompté.

Ceci semble du en particulier au fait que les moteurs pas à pas présentent un inconvénient majeur : l'observation des signaux d'alimentation électrique ne permet pas de garantir la position du rotor. En particulier les moteurs pas à pas présentent parfois des sauts accidentels de pas (perte ou avance) par exemple sous l'influence de blocages ou actions mécaniques, totalement indépendants des signaux d'alimentation.

On a bien sûr tenté de surmonter cette difficulté. Cependant les tentatives actuelles n'ont pas donné totalement satisfaction.

On a proposé par exemple d'associer les moteurs pas à pas à des capteurs d'angle, notamment des capteurs d'angle mécaniques ou optiques. Cependant cette solution conduit à des structures complexes, onéreuses et encombrantes.

On a également proposé dans le document EP-A-0 382 887 un procédé d'actionnement d'un moteur pas à pas, permettant d'initialiser la position de celui-ci, qui consiste à : commander le moteur pour déplacer le rotor ou un élément lié au rotor, vers une butée mécanique de position connue, détecter la tension induite dans un enroulement du moteur non alimenté et par conséquent ne prenant pas part à l'entrainement tandis qu'au moins un autre enroulement du moteur est alimenté, et interpréter l'absence de tension induite dans l'enroulement non alimenté comme signifiant que la butée mécanique est atteinte.

Le document EP-A-0 403 691 propose un autre procédé d'initialisation de la position d'un moteur pas à pas qui consiste à : commander le moteur pour déplacer le rotor ou un élément lié au rotor, vers une butée mécanique de position connue, et détecter l'atteinte de cette butée en alternant des cycles d'entrainement du moteur et des cycles de test au cours desquels l'un des enroulements du moteur reçoit des signaux de test périodiques tandis que l'on compare les tensions induites mesurées aux bornes d'un autre enroulement non alimenté, au cours de deux cycles de test successifs. Si les tensions induites mesurées au cours de deux cycles de test successifs aux bornes de l'enroulement non alimenté sont identiques, le moteur est considéré à l'arrêt, la butée mécanique étant atteinte. En revanche le système considère que la butée mécanique n'est pas atteinte et que le moteur est en mouvement si ces tensions induites mesurées au cours de deux cycles de test successifs diffèrent entre elles.

Le document FR-A-2 576 469 propose un procédé de contrôle d'un moteur pas à pas qui consiste à mesurer la tension induite dans un enroulement non alimenté, pendant l'alimentation d'au moins un autre enroulement, et à détecter soit le maximum par lequel passe la valeur de cette tension induite, soit le passage de sa valeur par un seuil de référence, au delà duquel on estime que le pas est franchi, pour valider le passage d'un pas commandé.

Le document US-A-4 282 471 propose un circuit de contrôle d'un moteur pas à pas qui comprend deux amplificateurs opérationnels sensibles à des signaux d'excitation appliqués à des enroulements respectifs, lesquels amplificateurs simulent une tension induite dans un bobinage non alimenté, et un comparateur qui compare cette tension simulée à la tension mesurée aux bornes de l'enroulement non alimenté, pour déduire la force contre-électromotrice générée dans ce bobinage non alimenté.

Le document EP-A-46 722 propose pour contrôler le blocage d'un moteur pas à pas, de mesurer la tension aux bornes d'un enroulement non alimenté, afin de détecter la tension induite par un signal d'excitation appliqué à un autre enroulement. Le moteur est considéré comme bloqué si la tension induite ainsi mesurée est supérieure à un seuil.

Les moyens ainsi proposés conformes à l'état de la technique ne donnent pas totalement satisfaction.

La présente invention a pour but de proposer de nouveaux moyens permettant de contrôler avec précision la position d'un moteur pas à pas.

Ce but est atteint selon la présente invention grâce à un procédé de commande d'un moteur pas à pas comprenant les étapes qui consistent à :
- commander le moteur pour déplacer le rotor ou un élément lié au rotor, vers une butée mécanique de position connue,
- détecter un signal électrique induit dans un enroulement non alimenté du moteur, et
- interpréter l'absence de signal induit dans l'enroulement non alimenté comme signifiant que la butée mécanique est atteinte,
caractérisé par le fait que
- l'étape de commande du moteur pour déplacer le rotor ou un élément lié au rotor vers une butée mécanique de position connue, consiste à appliquer aux enroulements du moteur, des séquences de signaux de commande comprenant au moins un intervalle de temps pendant lequel les signaux de commande sont nuls, les signaux de commande appliqués au moteur en dehors de cet intervalle de temps étant conçus pour permettre au moteur de franchir cet intervalle de temps, en mouvement, malgré l'absence de signaux de commande, si la butée mécanique n'est pas atteinte, et
- l'étape de détection est opérée pendant ledit intervalle de temps pendant lequel les signaux de commande sont nuls.

Comme on l'expliquera par la suite, la présente invention permet de ne détecter que la force contre-électromotrice générée par la rotation de l'aimant du rotor, en s'affranchissant en toute sécurité, et sans circuit de traitement de signal complexe, des signaux induits dans un enroulement non alimenté par couplage inductif avec un enroulement alimenté.

La présente invention concerne également un dispositif de commande de moteur pas à pas comprenant :
- des moyens aptes à commander le moteur pour déplacer le rotor ou un élément lié au rotor, vers une butée mécanique de position connue,
- des moyens aptes à détecter un signal électrique induit dans un enroulement non alimenté du moteur, et
- des moyens aptes à interpréter l'absence de signal induit dans l'enroulement non alimenté comme signifiant que la butée mécanique est atteinte,
caractérisé par le fait que les moyens de détection comprennent un shunt connecté en série de l'enroulement de moteur non alimenté pour permettre de mesurer le courant induit dans cet enroulement, et que le circuit de détection comprend un étage intégrateur.

Comme on l'expliquera par la suite, la détection du courant induit dans l'enroulement, conformément à la présente invention, et non pas de la tension induite aux bornes de l'enroulement, comme proposé antérieurement selon l'état de la technique, permet de simplifier le circuit et d'obtenir une excellente sensibilité de détection.

D'autres caractéristiques, buts et avantages de la présente invention apparaitront à la lecture de la description détaillée qui va suivre et en regard des dessins annexés, donnés à titre d'exemple non limitatif et sur lesquels:
- la figure 1 représente une vue schématique générale d'un circuit de commande conforme à la présente invention,
- la figure 2 représente un circuit de détection conforme à un mode de réalisation préférentiel de la présente invention,
- la figure 3 illustre schématiquement des signaux de commande appliqués aux bobinages du moteur et d'intervalle de mesure de la forceélectromotrice,
- la figure 4 représente les temps de mesure, dans le cadre d'une variante de réalisation de l'invention, et
- les figures 5 et 6 représentent des signaux mesurés sur un moteur, respectivement avant et après que celui-ci n'atteigne la burée mécanique.

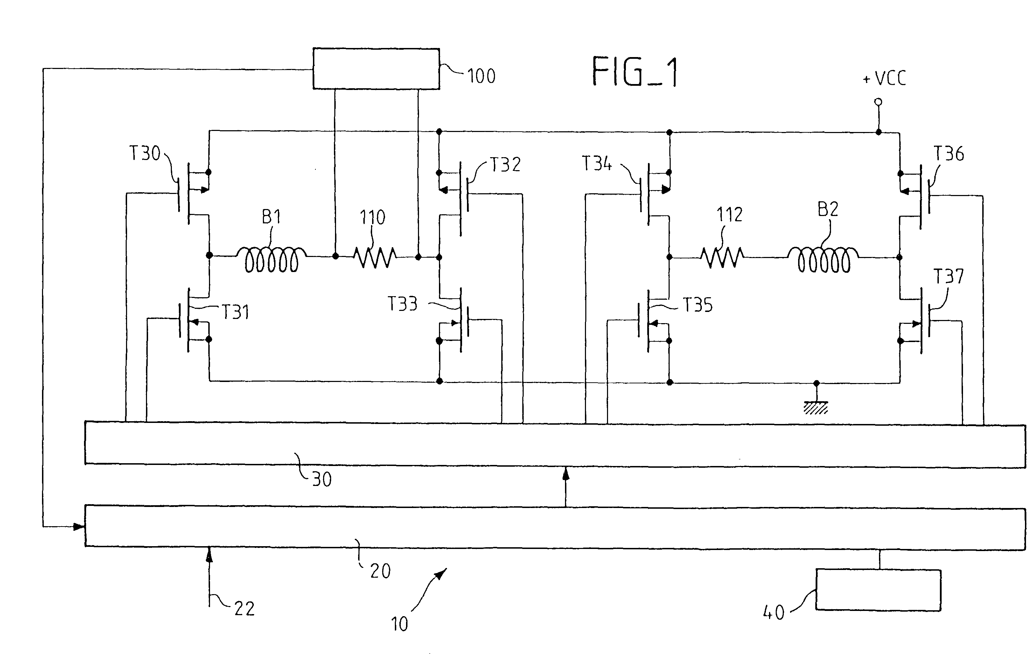

On va tout d'abord décrire la structure générale du circuit 10 de commande d'un moteur pas à pas représenté sur la figure 1.

Sur cette figure 1, on a représenté les deux bobinages du moteur sous les références B1 et B2.

Le circuit de commande 10 comprend essentiellement une unité centrale 20, un circuit de sortie 30, une table de mémoire 40 et un circuit de détection 100.

La table de mémoire 40 est adaptée pour contenir des données, de préférence numériques, représentant les valeurs trigonométriques des angles à parcourir. La table 40 peut contenir par exemple les valeurs en 128 points d'une fonction sinus de 0° à 90°.

L'unité 20 reçoit sur son entrée 22 un signal d'entrée représentatif de l'angle à atteindre par le rotor du moteur, par exemple représentatif de l'angle à visualiser à l'aide d'une aiguille liée à l'arbre de sortie de ce rotor.

L'unité 20 convertit ce signal par traitement selon des modalités bien connues de l'homme de l'art en une valeur représentative de l'angle à atteindre.

L'amplitude des signaux en sinus et cosinus devant être appliqués respectivement aux deux bobines B1 et B2 pour atteindre l'angle de déviation recherché est déterminée par lecture de la table 40.

Pour celà les valeurs en sinus sont lues dans la table 40 en lecture normale, c'est à dire en commençant la lecture de la table au début de celle-ci, et les valeurs en cosinus sont lues dans la même table 40 en sens inverse, c'est à dire en commençant la lecture de cette table par la fin.

Par ailleurs les valeurs positive et négative des signaux de commande du moteur pas à pas sont obtenues en inversant le sens du courant dans les bobinages B1 et B2.

A cette fin, comme on le voit sur la figure 1, de préférence chaque extrémité des bobinages B1 et B2 est alimentée, de façon connue en soi, par l'intermédiaire d'un pont de deux interrupteurs commandés T30 à T37 rendus alternativement passant selon le sens du courant recherché et reliés respectivement à une tension d'alimentation positive +VCC et à la masse. De tels interrupteurs commandés sont formés de préférence de transistors MOS respectivement de type N et de type P.

Par ailleurs, dans le cadre de la présente invention, les interrupteurs T30 à T37 sont alimentés par des signaux en PWM générés par l'étage de sortie 30, c'est-à-dire des signaux d'amplitude constante et de rapports cycliques variables.

Comme on l'a indiqué précédemment, le système équipé du moteur comprend une butée mécanique de position connue pour le rotor. La butée peut être prévue dans le moteur lui-même. Cependant, la butée peut être placée à l'extérieur du moteur pour coopérer avec un levier lié à l'arbre de sortie du moteur, par exemple une aiguille liée à cet arbre de sortie.

Selon une caractéristique de l'invention, les moyens de commande 20 sont adaptés pour appliquer aux enroulements B1 et B2 du moteur des séquences de signaux de commande comprenant au moins un intervalle de temps pendant lequel les signaux de commande sont nuls. Ces signaux de commande appliqués aux enroulements B1 et B2 sont conçus pour permettre au moteur de franchir cet intervalle de temps, en mouvement, malgré l'absence de signaux de commande, si la butée mécanique n'est pas atteinte.

Pour un moteur à N paires de pôles, les moyens de commande 20 doivent appliquer N cycles magnétiques sur les bobinages B1 et B2 pour permettre au rotor de parcourir un tour complet mécanique de 360°.

A titre d'exemple non limitatif, les signaux de commande appliqués respectivement aux bobinages B1 et B2 sont des fonctions sinus et cosinus de l'angle de déviation recherché et, l'intervalle de temps des signaux de commande pendant lequel ces derniers sont nuls, correspond au moins à une ortion d'un quadrant déphasé de 90 à 180° dans chaque cycle magnétique de commande, par rapport à l'instant de commande qui coïncide avec la position occupée par le rotor lorsque la butée mécanique est atteinte.

Ainsi par exemple, de préférence, la butée mécanique coïncide avec l'origine trigonométrique des fonctions sinus et cosinus de commande et l'intervalle de temps pendant lequel les signaux de commande sont nuls correspond au moins à une portion du second quadrant de ces fonctions.

Par ailleurs, le circuit de détection 100 détecte le courant induit dans l'un des enroulements B1, lorsque cet enroulement n'est pas alimenté. Selon l'invention cette détection de courant induit est opérée par mesure de la tension aux bornes d'un shunt résistif 110 connecté en série de l'enroulement B1. Pour des raisons d'équilibre, de préférence, un shunt résistif identique 112 est connecté en série du deuxième enroulement B2.

Le circuit de détection 100 interprète l'absence de signal induit dans l'enroulement B1 non alimenté (soit une tension nulle aux bornes du shunt 110) comme signifiant que la butée mécanique est atteinte.

La détection du courant induit, à l'aide du shunt 110, et non point de la tension aux bornes d'enroulement B1, permet d'obtenir une grande sensibilité de détection.

De plus, la détection du courant induit dans l'enroulement B1 au moment où aucun des enroulements B1 et B2 n'est alimenté permet de ne détecter que la force contre-électromotrice générée dans l'enroulement B1 par la rotation de l'aimant du rotor, en s'affranchissant en toute sécurité de l'influence d'un couplage inductif entre les différents enroulements.

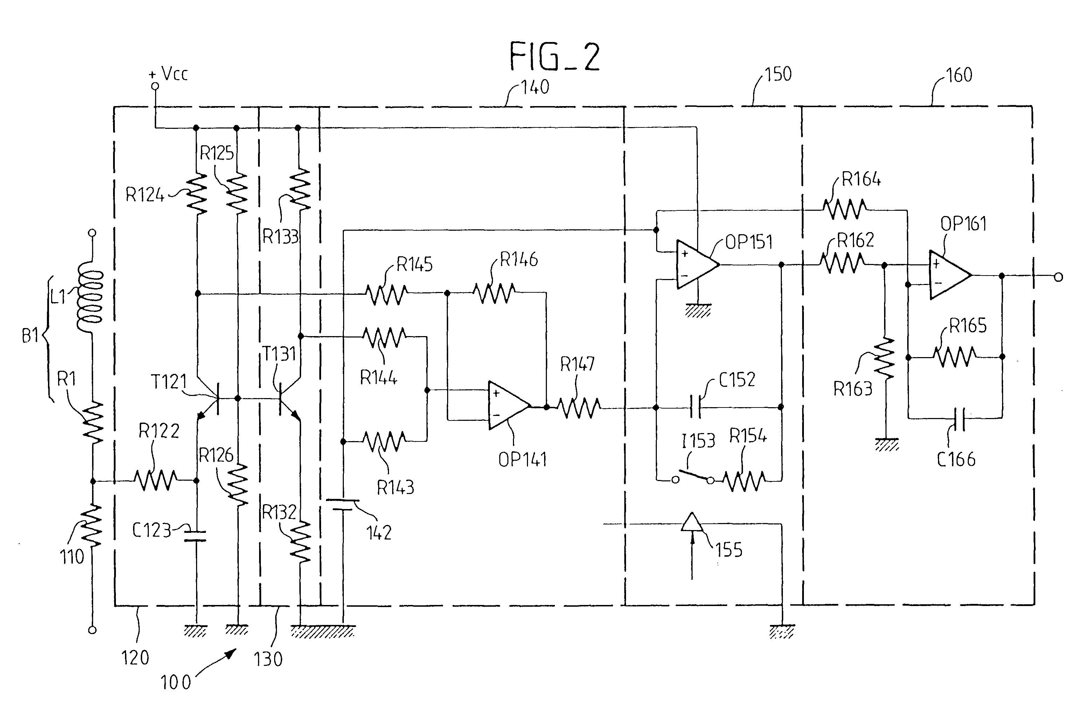

On va maintenant décrire un circuit de détection préférentiel 100 en regard de la figure 2.

Sur cette figure 2, on a schématisé sous la référence L1 la partie selfique de l'enroulement B1 et sous la référence R1 la partie résistive de cet enroulement B1. Par ailleurs, on retrouve le shunt résistif 110 connecté en série de l'enroulement B1. Pendant le temps de détection, les deux extrémités de la branche comprenant en série l'enroulement B1 et le shunt 110 sont considérées comme reliées à la masse, les deux interrupteurs T31 et T33 étant rendus conducteurs.

Le circuit de détection 100 comprend deux étages d'entrée 120, 130, un étage différentiel 140, un étage intégrateur 150 et un étage de sortie 160.

L'étage d'entrée 120 est un étage transistorisé à base commune. Il comprend un transistor T121 dont l'émetteur est relié au point commun au shunt 110 et à l'enroulement B1 par une résistance de liaison R122. Le même émetteur est relié à la masse par un condensateur C123 qui sert de filtrage pour coupler les restes de PWM et autres parasites rapides.

Le collecteur du transistor T121 est relié à la borne d'alimentation +VCC par une résistance R124 et sa base est reliée au point milieu d'un pont diviseur résistif R125, R126 relié entre la borne +VCC et la masse.

Cet étage d'entrée 120 permet d'amplifier le signal détecté aux bornes du shunt 110 et de décaler ce signal par rapport à la masse. Cette étape peut fonctionner avec des signaux d'entrée négatifs. Son impédance d'entrée faible rend le circuit peu sensible aux parasites. L'étage d'entrée 120 permet ainsi de s'affranchir d'une alimentation négative les courants mesurés n'ayant pas de composante continue.

Le deuxième étage d'entrée 130 comprend un transistor T131 dont la base est reliée à la base du transistor T121, l'émetteur est relié à la masse par une résistance R132 et le collecteur est relié à la borne +VCC par une résistance R133. Cet étage 130 fournit sur le collecteur de T131, une tension qui a les mêmes dérives en fonction de la tension d'alimentation et de la température que le premier étage 120.

L'étage différentiel 140 comprend un amplificateur opérationnel OP141 conçu pour opérer, d'une part la sommation entre le signal détecté sur le collecteur du transistor T131 et la tension d'une cellule d'alimentation régulée 142, et d'autre part une différence entre le résultat de cette sommation et le signal prélevé sur le collecteur du transistor T121. L'étage 140 supprime la composante continue instable et la remplace par une valeur fixe.

Pour cela, l'entrée non inverseuse de OP141 est reliée par l'intermédiaire de résistances respectives R143, R144 à la cellule 142 et au collecteur de T131. L'entrée inverseuse de OP141 est reliée au collecteur de T121 par une résistance R145. La sortie de OP141 est rebouclée sur son entrée inverseuse par une résistance R146.

La sortie de OP141 est reliée à l'entrée de l'étage intégrateur 150 par une résistance de liaison R147.

L'étage différentiel 140 permet de supprimer toute influence néfaste, notamment quant au gain, des dérives des étages d'entrée 120, 130 en fonction des évolutions de la tension d'alimentation +VCC et de la température.

L'étage intégrateur 150 a pour but de rendre l'amplitude du signal indépendante de la vitesse angulaire de rotation du rotor. Il est articulé autour d'un amplificateur opérationnel OP151. L'entrée inverseuse de celui-ci est reliée à la résistance de liaison R147. La sortie de l'ampli OP151 est rebouclée sur son entrée inverseuse par une capacité C152.

Cette capacité C152 est déchargée sur commande par la fermeture d'un interrupteur I153 relié en parallèle du condensateur C152 par l'intermédiaire d'une résistance R154. L'interrupteur I153 est piloté par un module de commande 155 contrôlé par l'unité 20.

L'entrée non inverseuse de OP151 est reliée à la cellule de référence 142.

De préférence, le module 155 impose la fermeture de l'interrupteur I153 sur deux quadrants de chaque cycle magnétique après le quadrant correspondant à l'intervalle de temps pendant lequel aucun des deux enroulements B1, B2 n'est alimenté.

L'étage de sortie 160 comprend un étage amplificateur articulé autour d'un amplificateur opérationnel OP161. L'entrée non inverseuse de OP161 est reliée à la sortie de OP151 par une résistance R162 et à la masse par une résistance R163.

L'entrée inverseuse de OP161 est reliée à la cellule de référence 142 par une résistance R164.

Enfin, la sortie de OP161 est rebouclée sur son entrée inverseuse par un ensemble comprenant en parallèle une résistance R165 et un condensateur C166.

L'étage de sortie définit un décalage de niveau égal à l'amplitude de la cellule de référence 142, inverse du décalage imposé par l'étage différentiel 140.

Le cas échéant, l'étage de sortie 160 peut être omis. Dans ce cas, on exploite le signal disponible sur la sortie de l'étage 150, lequel signal évolue de part et d'autre d'un niveau moyen décalé par rapport à la masse, selon le sens de rotation du rotor, contrairement au signal de sortie de l'étage 160.

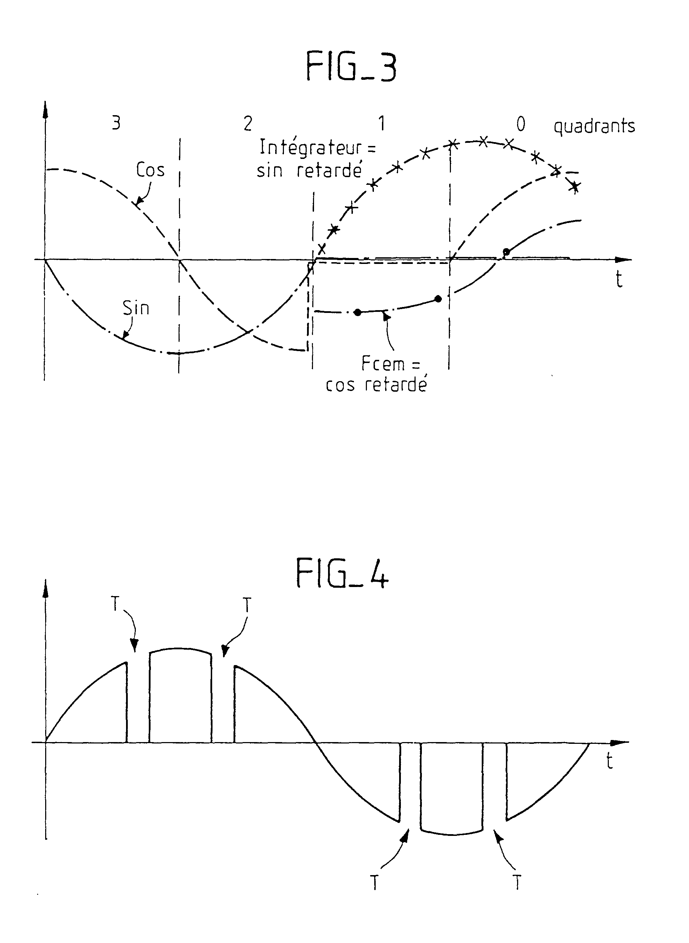

Sur la figure 3, on a représenté quatre quadrants d'un cycle magnétique :
- le signal en sinus, référencé sin, appliqué à la bobine B1, (lequel signal sin est interrompu sur les quadrants 0 et 1),
- le signal en cosinus, référencé cos, appliqué à la bobine B2, (lequel signal cos est interrompu sur le quadrant 1),
- la force contre-électromotrice, référencée fcem, détectée dans la bobine B1 pendant les quadrants 0 et 1, qui correspond à un cosinus retardé par rapport à l'angle commandé, et
- le résultat de l'intégration de cette force contre-électromotrice pendant les quadrants 0 et 1, dans l'étage 150, qui correspond à un sinus retardé.

Sur la figure 3, l'échelle des temps est orientée dans un sens rétrograde, c'est-à-dire dans le sens d'un entraînement vers la butée mécanique.

Pour un entraînement sens direct, l'ordre des quadrants 0, 1, 2, 3 est inversé et les signaux de commande en sinus et cosinus sont générés conformément aux fonctions trigonométriques classiques, sans atténuation sur aucun quadrant.

L'homme de l'art comprendra aisément que le signal disponible en sortie de OP161 est directement représentatif du courant induit dans l'enroulement B1 par la force contre-électromotrice résultant de la rotation du moteur pendant l'intervalle de temps de non alimentation des bobinages B1 et B2.

Ainsi, le signal disponible pendant cet intervalle de temps, à la sortie de OP161, est nul lorsque la butée mécanique est atteinte. En effet, dans ce cas, l'aimant lié au rotor ne peut se déplacer en regard de l'enroulement B1. En revanche, le signal disponible pendant le même intervalle de temps à la sortie de OP161 présente une amplitude significative lorsque la butée mécanique n'est pas atteinte.

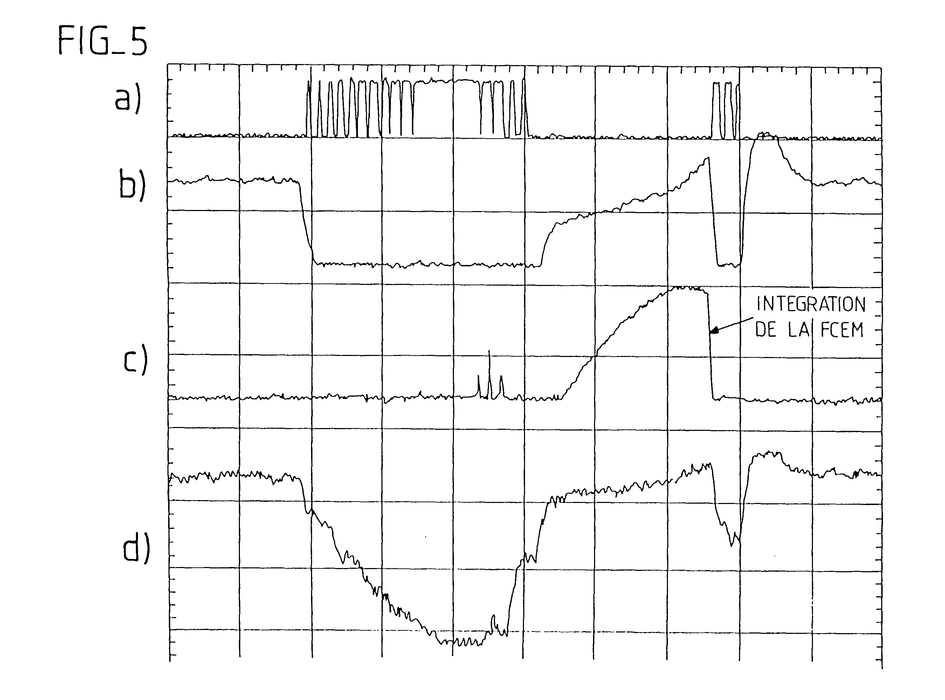

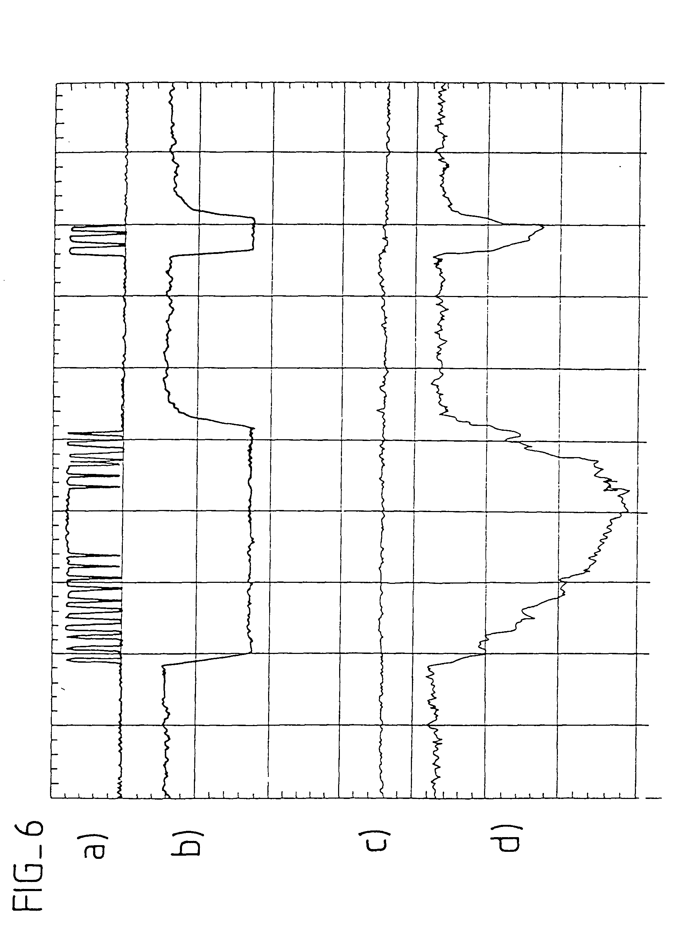

Sur les figures 5 et 6, on a représenté :
- sur les lignes a, les signaux sinus en PWM appliqués à la bobine B1 (avec sous échantillonnage de la mesure),
- sur les lignes b, les signaux représentant le courant induit mesuré dans le shunt 110, et par conséquent dans le bobinage B1, après écrêtage résultant d'un gain dans un étage amplificateur,
- sur les lignes c, les signaux obtenus en sortie de l'étage intégrateur 150, et
- sur les lignes d, des signaux représentant le courant dans le shunt 110.

On aperçoit clairement l'image de la force contre-électromotrice induite dans le moteur lorsque celui-ci tourne, sur la figure c) de la figure 5 ; alors que la ligne c) de la figure 6, cas où le moteur est en arrêt sur la butée mécanique ne révèle pas une telle feem.

Bien entendu la présente invention n'est pas limitée au mode de réalisation particulier qui vient d'être décrit mais s'étend à toute variante conforme à son esprit.

Selon une variante de réalisation, comme schématisé sur la figure 4, les intervalles de temps T pendant lesquels les signaux de commande sont nuls et l'on effectue la mesure du courant induit dans le bobinage B1, coïncident avec des instants d'échantillonnage imposés par les moyens 20, sur chaque cycle des signaux de commande, par exemple un ou deux instants d'échantillonnage sur chaque alternance des signaux de commande en sinus et cosinus, équirépartis sur ce cycle.

Ces intervalles de temps T utilisés pour la mesure peuvent avoir par exemple une durée allant de 1/8 à 1/20 de la durée d'un cycle magnétique.

Pour annuler les signaux de commande appliqués aux enroulements B1 et B2, l'unité centrale 20 rend deux transistors T31 et T33, T35 et T37 ou T30 et T32, T34 et T36, simultanément passant afin de placer les deux extrémités des branches comprenant un enroulement B1 ou B2 et un shunt 110 ou 112 au même potentiel (soit à la masse, soit au potentiel +VCC).

On notera que dans le cadre de la présente invention, les moyens T30 à T37 qui contrôlent les signaux de commande appliqués aux enroulements B1 et B2, ne prennent pas un état "haute impédance". Cela constitue un avantage appréciable par rapport aux circuits décrits dans les documents précités EP-A-0382887 et EP-A-0403691. En effet, les transistors T30 à T37 ne laissent jamais une extrémité de bobinage B1 ou B2 en l'air ou à un potentiel non fixé. Ils contrôlent toujours un passage de courant et n'ont de ce fait pas à supporter d'importantes surtensions.

Il est vrai que lorsque deux extrémités d'une bobine B1 ou B2 sont mises à la masse ou au potentiel +VCC par deux de ses transistors de commande associés, l'un de ceux-ci reçoit un courant dans le sens inverse de son nominal. Cependant des transistors T30 à T37 type MOS peuvent supporter sans difficulté ces courants inverses en raison de leurs amplitude et durée limitées.

En revanche, de tels transistors supportent mal un état haute impédance en raison du fort pic de tension induit par la self-inductance de la bobine.

La détection de signal peut être opérée sur l'un ou l'autre des deux enroulements, pendant l'intervalle de temps lors duquel les signaux de commande sont nuls. Cependant de préférence, on choisit celui des enroulements dans lequel le signal induit présente une amplitude maximale (sachant par exemple que la fcem induite dans l'enroulement normalement alimenté en sinus, est de type cosinus, et inversement pour l'autre enroulement).

Selon une autre caractéristique de l'invention, il est prévu au moins un temps d'échantillonnage pendant chaque alternance de signaux de commande.

Selon une autre caractéristique de l'invention, l'étape de détection consiste à mesurer la tension induite aux bornes de l'enroulement non alimenté.

Selon une autre caractéristique de l'invention, les moyens interrupteurs comprennent une paire de transistors T30 à T37 sur chaque extrémité de la branche comprenant l'enroulement B1 et le shunt 110, chaque paire de transistors étant montée en série entre la masse et une borne d'alimentation, et le point commun central aux deux transistors étant reliés à une extrémité de ladite branche.

## Revendications

1. Procédé de commande d'un moteur pas à pas comprenant les étapes qui consistent à :
- commander le moteur pour déplacer le rotor ou un élément lié au rotor, vers une butée mécanique de position connue,
- détecter un signal électrique induit dans un enroulement (B1) non alimenté du moteur, et
- interpréter l'absence de signal induit dans l'enroulement (B1) non alimenté comme signifiant que la butée mécanique est atteinte,
**caractérisé par le fait que**
- l'étape de commande du moteur pour déplacer le rotor ou un élément lié au rotor vers une butée mécanique de position connue, consiste à appliquer aux enroulements (B1, B2) du moteur, des séquences de signaux de commande comprenant au moins un intervalle de temps pendant lequel les signaux de commande sont nuls, les signaux de commande appliqués au moteur en dehors de cet intervalle de temps étant conçus pour permettre au moteur de franchir cet intervalle de temps, en mouvement, malgré l'absence de signaux de commande, si la butée mécanique n'est pas atteinte, et
- l'étape de détection est opérée pendant ledit intervalle de temps pendant lequel les signaux de commande sont nuls.

2. Procédé selon la revendication 1, **caractérisé par le fait que** dans chaque cycle magnétique des signaux de commande, l'intervalle de temps pendant lequel les signaux de commande sont nuls correspond au moins à une portion d'un quadrant déphasé de 90 à 180° par rapport à l'instant de commande qui coïncide avec la position occupée par le rotor lorsque la butée mécanique est atteinte.

3. Procédé selon l'une des revendications 1 ou 2, **caractérisé par le fait que** la butée mécanique coïncide avec l'origine trigonométrique des signaux de commande et l'intervalle de temps pendant lequel les signaux de commande sont nuls correspond au moins à une portion d'un second quadrant d'un cycle magnétique.

4. Procédé selon la revendication 1, **caractérisé par le fait que** l'intervalle de temps pendant lequel les signaux de commande sont nuls correspond à des instants d'échantillonnage prédéterminés.

5. Procédé selon la revendication 4, **caractérisé par le fait qu'**il est prévu au moins un temps d'échantillonnage pendant chaque alternance des signaux de commande.

6. Procédé selon l'une des revendications 1 à 5, **caractérisé par le fait que** le moteur pas à pas comprend deux enroulements (B1, B2) alimentés par des fonctions en sinus et cosinus de l'angle de déviation recherché.

7. Procédé selon l'une des revendications 1 à 6, **caractérisé par le fait que** l'étape de détection consiste à mesurer le courant induit par la force contre-électromotrice dans l'enroulement (B1) non alimenté par mesure de la tension aux bornes d'un shunt résistif (110) connecté en série de cet enroulement (B1).

8. Procédé selon l'une des revendications 1 à 6, **caractérisé par le fait que** l'étape de détection consiste à mesurer la tension induite aux bornes de l'enroulement (B1) non alimenté.

9. Dispositif de commande de moteur pas à pas comprenant :
- des moyens (20) aptes à commander le moteur pour déplacer le rotor ou un élément lié au rotor, vers une butée mécanique de position connue,
- des moyens (100, 110) aptes à détecter un signal électrique induit dans un enroulement (B1) non alimenté du moteur, et
- des moyens (20, 100) aptes à interpréter l'absence de signal induit dans l'enroulement non alimenté comme signifiant que la butée mécanique est atteinte,
**caractérisé par le fait que** les moyens de détection comprennent un shunt (110) connecté en série de l'enroulement (B1) de moteur non alimenté pour permettre de mesurer le courant induit dans cet enroulement, et que le circuit de détection comprend un étage intégrateur (150).

10. Dispositif selon la revendication 9, **caractérisé par le fait que** le circuit de détection comprend un étage différentiel (140).

11. Dispositif selon l'une des revendications 9 ou 10, **caractérisé par le fait que** les moyens de commande sont adaptés pour appliquer aux enroulements (B1, B2) du moteur des séquences de signaux de commande comprenant au moins un intervalle de temps pendant lequel les signaux de commande sont nuls, les signaux de commande appliqués aux enroulements (B1, B2) du moteur en dehors de cet intervalle de temps étant conçus pour permettre au moteur de franchir cet intervalle de temps, en mouvement, malgré l'absence de signaux de commande, si la butée mécanique n'est pas atteinte, et les moyens de détection (100) sont adaptés pour détecter le courant induit pendant cet intervalle de temps.

12. Dispositif selon l'une des revendications 9 à 11, **caractérisé par le fait qu'**il comprend des moyens interrupteurs (T30 à T37) adaptés pour relier à un potentiel commun les deux extrémités de la branche comprenant l'enroulement (B1) et le shunt (110) pendant des intervalles de temps spécifiques.

13. Dispositif selon la revendication 12, **caractérisé par le fait que** les moyens interrupteurs (T30 à T37) sont formés de transistors, de préférence de transistors MOS.

14. Dispositif selon l'une des revendications 12 ou 13, **caractérisé par le fait que** les moyens interrupteurs comprennent une paire de transistors (T30 à T37) sur chaque extrémité de la branche comprenant l'enroulement (B1) et le shunt (110), chaque paire de transistors étant montée en série entre la masse et une borne d'alimentation, et le point commun central aux deux transistors étant reliés à une extrémité de ladite branche.

## Patentansprüche

1. Verfahren zur Steuerung eines Schrittmotors, welches die Verfahrensschritte aufweist, die darin bestehen:
- Steuern des Motor so, daß der Rotor oder ein mit dem Rotor verbundenes Element gegen einen mechanischen Anschlag bekannter Lage versetzt wird,
- Nachweisen eines elektrischen Signals, welches in einer nicht gespeisten Wicklung (B1) des Motors induziert wird, und
- Interpretieren des Fehlens eines induzierten Signals in der nicht gespeisten Wicklung (B1) als Ausdruck dafür, daß der mechanische Anschlag erreicht ist,
**dadurch gekennzeichnet, daß**
- der Schritt der Steuerung des Motors so, daß der Rotor oder ein mit dem Rotor verbundenes Element gegen einen mechanischen Anschlag bekannter Lage versetzt wird, darin besteht, an die Wicklungen (B1, B2) des Motors Folgen von Steuersignalen anzulegen, welche wenigstens ein Zeitintervall aufweisen, in welchem die Steuersignale null sind, wobei die an den Motor außerhalb dieses Intervalls angelegten Steuersignale so eingerichtet sind, daß der Motor dieses Zeitintervall trotz des Fehlens von Steuersignalen in Bewegung überschreiten kann, wenn der mechanische Anschlag nicht erreicht ist, und
- der Nachweisschritt während des Intervalls, in welchem die Steuersignale null sind, durchgeführt wird.

2. Verfahren nach Anspruch 1, **dadurch gekennzeichnet, daß** in jedem magnetischen Zyklus der Steuersignale das Zeitintervall, in welchem die Steuersignale null sind, wenigstens einem Abschnitt eines Quadranten entspricht, der 90 bis 180° in Bezug auf den Steuerzeitpunkt phasenverschoben ist, der mit der Stellung zusammenfällt, die der Rotor einnimmt, wenn der mechanische Anschlag erreicht ist.

3. Verfahren nach einem der Ansprüche 1 oder 2, **dadurch gekennzeichnet, daß** der mechanische Anschlag mit dem trigonometrischen Ursprung der Steuersignale zusammenfällt und das Zeitintervall, in welchem die Steuersignale null sind, wenigstens einem Abschnitt eines zweiten Quadranten eines magnetischen Zyklus entspricht.

4. Verfahren nach Anspruch 1, **dadurch gekennzeichnet, daß** das Zeitintervall, in welchem die Steuersignale null sind, bestimmten Sampling-Zeitpunkten entspricht.

5. Verfahren nach Anspruch 4, **dadurch gekennzeichnet, daß** wenigstens eine Sampling-Zeit während jeder Halbperiode der Steuersignale vorgesehen ist.

6. Verfahren nach einem der Ansprüche 1 bis 5, **dadurch gekennzeichnet, daß** der Schrittmotor zwei Wicklungen (B1, B2) aufweist, die mit Sinus- und Kosinusfunktionen des gesuchten Ausschlagwinkels gespeist werden.

7. Verfahren nach einem der Ansprüche 1 bis 6, **dadurch gekennzeichnet, daß** der Nachweisschritt in einer Messung des Stroms, der durch die gegenelektromotorische Kraft in der nicht gespeisten Wicklung (B1) induziert wird, durch Messung der Spannung an den Klemmen eines Nebenschlußwiderstands (110), der mit dieser Wicklung (B1) in Reihe liegt, besteht.

8. Verfahren nach einem der Ansprüche 1 bis 6, **dadurch gekennzeichnet, daß** der Nachweisschritt in einer Messung der Spannung besteht, die an den Klemmen der nicht gespeisten Wicklung (B1) induziert wird.

9. Vorrichtung zur Steuerung eines Schrittmotors, welche aufweist:
- Mittel (20), eingerichtet für eine Steuerung des Motors so, daß der Rotor oder ein mit dem Rotor verbundenes Element gegen einen mechanischen Anschlag bekannter Lage versetzt wird,
- Mittel (100, 110), eingerichtet für einen Nachweis eines elektrischen Signals, welches in einer nicht gespeisten Wicklung (B1) des Motors induziert wird, und
- Mittel (20, 100), eingerichtet für ein Interpretieren des Fehlens eines in der nicht gespeisten Wicklung induzierten Signals als Ausdruck dafür, daß der mechanische Anschlag erreicht ist,
**dadurch gekennzeichnet, daß** die Nachweismittel einen Nebenschlußwiderstand (110), der in Reihe mit der nicht gespei-. sten Wicklung (B1) des Motors liegt, zur Ermöglichung einer Messung des in dieser Wicklung induzierten Stroms aufweisen, und daß die Nachweisschaltung eine Integrierstufe (150) aufweist.

10. Vorrichtung nach Anspruch 10 , **dadurch gekennzeichnet, daß** die Nachweisschaltung eine Differenzierstufe (140) aufweist.

11. Vorrichtung nach einem der Ansprüche 9 oder 10, **dadurch gekennzeichnet, daß** die Steuermittel so eingerichtet sind, daß sie an die Wicklungen (B1, B2) des Motors Steuersignalfolgen anlegen, welche wenigstens ein Zeitintervall aufweisen, in welchem die Steuersignale null sind, wobei die an die Wicklungen (B1, B2) des Motors außerhalb dieses Zeitintervalls gelegten Steuersignale so eingerichtet sind, daß sie es dem Motor ermöglichen, dieses Zeitintervall trotz des Fehlens von Steuersignalen in Bewegung zu überschreiten, wenn der mechanische Anschlag nicht erreicht, und die Nachweismittel (100) so eingerichtet sind, daß sie den während dieses Zeitintervalls induzierten Strom nachweisen.

12. Vorrichtung nach einem der Ansprüche 9 bis 11, **dadurch gekennzeichnet, daß** sie Schaltmittel (T30 bis T37) aufweist, die für ein Verbinden der beiden Enden des die Wicklung (B1) und den Nebenschlußwiderstand (110) aufweisenden Zweigs während spezifischer Zeitintervalle mit einem gemeinsamen Potential eingerichtet sind.

13. Vorrichtung nach Anspruch 12, **dadurch gekennzeichnet, daß** die Schaltmittel (T30 bis T37) durch Transistoren, vorzugsweise MOS-Transistoren, gebildet sind.

14. Vorrichtung nach einem der Ansprüche 12 oder 13, **dadurch gekennzeichnet, daß** die Schaltmittel ein Paar von Transistoren (T30 bis T37) an jedem Ende des die Wicklung (B1) und den Nebenschlußwiderstand (110) enthaltenden Zweigs aufweisen, wobei jedes Transistorpaar in Reihe zwischen Masse und einer Speiseklemme angebracht ist und der den beiden Transistoren gemeinsame Mittelpunkt mit einem Ende des Zweigs verbunden ist.

## Claims

1. Process for controlling a stepper motor comprising the steps which consist in:
- operating the motor so as to move the rotor or an element secured to the rotor, to a mechanical stop of known position,
- detecting an electrical signal induced in a nonenergized winding (B1) of the motor, and
- interpreting the absence of induced signal in the nonenergized winding (B1) as signifying that the mechanical stop has been reached,
**characterized in that**
- the step of operating the motor so as to move the rotor or an element secured to the rotor to a mechanical stop of known position, consists in applying to the windings (B1, B2) of the motor, sequences of control signals comprising at least one time interval during which the control signals are zero, the control signals applied to the motor outside of this time interval being designed to allow the motor to traverse this time interval, while moving, despite the absence of control signals, if the mechanical stop has not been reached, and
- the detection step is carried out during the said time interval during which the control signals are zero.

2. Process according to Claim 1, **characterized in that** in each magnetic cycle of the control signals, the time interval during which the control signals are zero corresponds at least to a portion of a quadrant which is out of phase by 90 to 180° with respect to the control instant which coincides with the position occupied by the rotor when the mechanical stop is reached.

3. Process according to one of Claims 1 or 2, **characterized in that** the mechanical stop coincides with the trigonometric origin of the control signals and the time interval during which the control signals are zero corresponds at least to a portion of a second quadrant of a magnetic cycle.

4. Process according to Claim 1, **characterized in that** the time interval during which the control signals are zero corresponds to predetermined sampling instants.

5. Process according to Claim 4, **characterized in that** there is provided at least one sampling time during each alternation of the control signals.

6. Process according to one of Claims 1 to 5, **characterized in that** the stepper motor comprises two windings (B1, B2) energized by sine and cosine functions of the sought-after angle of deviation.

7. Process according to one of Claims 1 to 6, **characterized in that** the detection step consists in measuring the current induced by the back electromotive force in the nonenergized winding (B1) by measuring the voltage across the terminals of a resistive shunt (110) connected in series with this winding (B1).

8. Process according to one of Claims 1 to 6, **characterized in that** the detection step consists in measuring the voltage induced across the terminals of the nonenergized winding (B1).

9. Stepper motor control device comprising:
- means (20) able to operate the motor so as to move the rotor or an element secured to the rotor, to a mechanical stop of known position,
- means (100, 110) able to detect an electrical signal induced in a nonenergized winding (B1) of the motor, and
- means (20, 100) able to interpret the absence of induced signal in the nonenergized winding as signifying that the mechanical stop has been reached,
**characterized in that** the detection means comprise a shunt (110) connected in series with the nonenergized motor winding (B1) so as to make it possible to measure the current induced in this winding, and that the detection circuit comprises an integrator stage (150).

10. Device according to Claim 9, **characterized in that** the detection circuit comprises a differential stage (140).

11. Device according to one of Claims 9 or 10, **characterized in that** the control means are adapted to apply to the windings (B1, B2) of the motor, sequences of control signals comprising at least one time interval during which the control signals are zero, the control signals applied to the windings (B1,B2) of the motor outside of this time interval being designed to allow the motor to traverse this time interval, while moving, despite the absence of control signals, if the mechanical stop has not been reached, and the detection means (100) are adapted so as to detect the current induced during this time interval.

12. Device according to one of Claims 9 to 11, **characterized in that** it comprises breaker means (T30 to T37) adapted so as to link the two ends of the branch comprising the winding (B1) and the shunt (110) to a common potential during specific time intervals.

13. Device according to Claim 12, **characterized in that** the breaker means (T30 to T37) are formed of transistors, preferably of MOS transistors.

14. Device according to one of Claims 12 or 13, **characterized in that** the breaker means comprise a pair of transistors (T30 to T37) on each end of the branch comprising the winding (B1) and the shunt (110), each pair of transistors being mounted in series between the earth and a supply terminal, and the common point central to the two transistors being linked to one end of the said branch.
